# EUROPEAN PATENT SPECIFICATION

(11) **EP 2 405 606 B1**
(45) Date of publication and mention of the grant of the patent: **12.09.2018**
(21) Application number: 09841018.6
(22) Date of filing: 22.10.2009
(51) Int. Cl.: H04L 12/24, H04L 12/741, H04L 12/931, H04L 12/437, H04L 12/759, H04L 12/707, H04L 12/703

(54) **METHOD FOR CONTROLLING THE TIMES OF REFRESHING THE ETHERNET FORWARDING DATABASE**
VERFAHREN ZUM STEUERN DER ZEITEN DES AUFFRISCHENS DER ETHERNET-WEITERLEITUNGS-DATENBANK
PROCÉDÉ POUR RÉGULER LES TEMPS DE RAFRAÎCHISSEMENT D'UNE BASE DE DONNÉES DE REDIRECTION ETHERNET

(30) Priority: 04.03.2009 CN 200910105869
(43) Date of publication of application: 11.01.2012
(73) Proprietor: ZTE Corporation, Shenzhen, Guangdong 518057 (CN)
(72) Inventor: WU, Shaoyong, Guangdong 518057 (CN)
(74) Representative: Office Freylinger
(86) International application number: PCT/CN2009/074571
(87) International publication number: WO 2010/099685

(56) References cited:
- WO-A1-2008/120931
- CN-A- 101 022 390
- CN-A- 101 023 631
- CN-A- 101 079 781
- JP-A- 2006 260 630
- US-A1- 2005 286 413
- US-A1- 2008 317 030
- US-B1- 6 766 482
- WANG BIN ZTE CORPORATION CHINA: "Includes pending state to support flushing FDB in non_revertive mechanism (G.8032);C 294", ITU-T DRAFT ; STUDY PERIOD 2009-2012, INTERNATIONAL TELECOMMUNICATION UNION, GENEVA ; CH, vol. 9/15, 23 November 2008 (2008-11-23), pages 1-9, XP017446986, [retrieved on 2008-11-23]
- Jeong-Dong Ryoo ET AL: "Ethernet ring protection for carrier ethernet networks", IEEE Communications Magazine, 1 January 2008 (2008-01-01), pages 136-143, XP055085744, New York DOI: 10.1109/MCOM.2008.4623718 Retrieved from the Internet: URL:http://ieeexplore.ieee.org/xpls/abs_al l.jsp?arnumber=4623718

## Description

### Field of the Invention

The present invention relates to the communication field, in particular to a method for controlling times of refreshing an Ethernet Forwarding Database.

### Background of the Invention

Currently, the Ethernet widely adopts various protection technologies, that is, the redundancy backup between a primary communication path and a backup communication path is achieved by using a plurality of communication paths existed in the network. When the primary path and the standby path are both working normally, the data forwarding function of the standby path is blocked and the protected data of the network are transmitted on the primary path; and when the primary path fails, the data forwarding function of the standby path is opened and the protected data of the network are switched to be transmitted on the standby path, thus achieving the switching of the path from a normal state to a failed state, which improves the anti-failure capability of the network.

In the Ethernet protection technology, when switching occurs in the protected network, the communication path changes, therefore, the node needs to refresh an Ethernet Forwarding Database (or Filtering Database, abbreviated as FDB), that is, those entries related to protection switching in the FDB are cleared. According to principles of the Ethernet, when a node receives a frame, a source address and an input port of this frame are recorded in the FDB, and therefore, the FDB includes frame address and corresponding port information. When the Ethernet node needs to forward a frame, it searches, according to the destination address of this frame, in the FDB to determine the output port of this frame, and forwards this frame to the output port; if no corresponding entry can be found in the FDB, then this frame is broadcasted to all the ports. Therefore, the FDB is an important information table for the Ethernet node to find an output port when forwarding a frame. During the protection switching of the Ethernet, the communication path changes, and if the interval of refreshing the FDB is too long, then it would cause some frames to be forwarded to the original wrong paths and unable to reach the destination node; on the other hand, if the interval of refreshing the FDB is too short, then a large amount of broadcast frames is required and it is easy to cause link congestion and difficult to achieve the object of rapid switching.

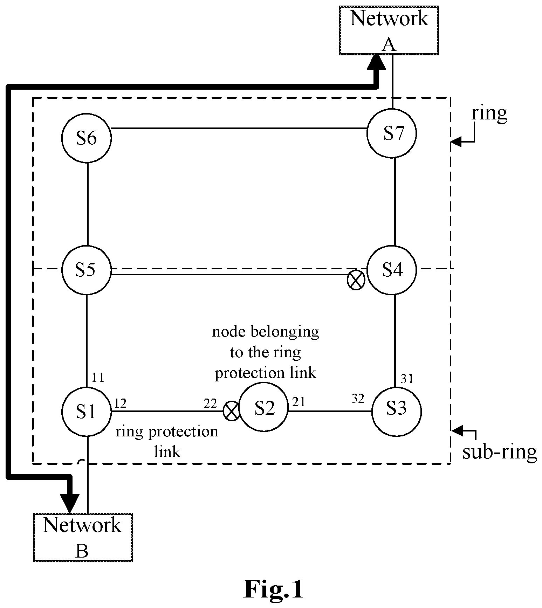

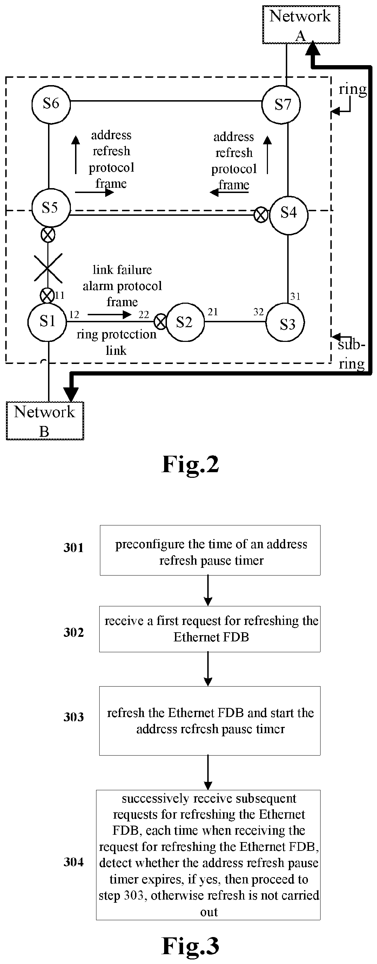

Fig. 1 is a schematic diagram of path protection of the Ethernet ring. As shown in Fig. 1, nodes S1, S2, S3, S4, S5, S6, and S7 support the exchange function of the Ethernet, and this Ethernet ring creates Ethernet ring protection domains, which include a ring consisted of nodes S4, S5, S6, and S7 and a sub-ring consisted of nodes S5, S1, S2, S3 and S4 (not including the link between nodes S4 and S5). There is a special link, which is referred to as ring protection link, on each ring and when all the ring protection links work normally, at least one of the two ports which are connected to this ring protection link is blocked to prevent the protected data from passing through this link. For example, the link between nodes S1 and S2 in Fig. 1 is a ring protection link of the sub-ring, and when all the links in the sub-ring work normally, node S2 blocks the port 22, which is connected to the ring protection link, to prevent the protected data from being transmitted in the ring protection link. The link between nodes S4 and S5 is a ring protection link of the ring. Since the ring protection link is blocked, the protected data between nodes only have one communication path, for example, there is only one communication path of network A-S7-S6-S5-S1-network B between networks A and B. When a link in the sub-ring fails, protection switching will be performed. Fig. 2 is a schematic diagram of protection switching when the Ethernet ring fails. As shown in Fig. 2, when the link between nodes S1 and S5 fails, after node S1 detects link failure, the sub-ring performs protection switching. Node S1 sends a link failure alarm protocol frame outwardly, and node S2 opens port 22 which is connected to the ring protection link when receiving the link failure alarm protocol frame. At this moment, nodes S1, S2, S3, S4 and S5 further needs to refresh the FDB. In addition, since the communication path between networks A and B changes on the ring, the nodes on the ring also need to refresh the FDB. According to the existing relevant art, the nodes S4 and S5 which is interconnected between the sub-ring and the ring successively send a plurality of address refresh protocol frames to the ring, and the nodes on the ring refresh the FDB when receiving these protocol frames. After the Ethernet ring completes the protection switching, since the ports which are connected to the ring protection link of the sub-ring are opened, the protected data between the nodes have a new communication path. The Ethernet ring protection technology effectively improves the reliability of Ethernet ring. In the Ethernet ring protection technology, when the sub-ring performs switching, the interconnected nodes need to successively send a plurality of address refresh protocol frames to other rings, and other nodes will refresh the FDB each time when receiving these protocol frames, therefore, it will cause the nodes on the ring to frequently refresh the FDB, thus generating a large amount of broadcast frames, which may cause instant data congestion and thus cause a large amount of data being lost.

Furthermore, in the Ethernet dual homing protection, there also exist similar problems, that is, during the protection switching, some nodes will refresh the FDB for a lot of times, which generates a large amount of broadcast frames and results in the instability of the switching, therefore, it is required to propose a method for refreshing the Ethernet Forwarding Database so as to reduce the times of unnecessary refresh.

WANG BIN ZTE CORPORATION CHINA: "Includes pending state to support flushing FDB in non_revertive mechanism (G. 8032); C 294" , ITU-T DRAFT; Jeong-Dong Ryoo ET AL: "Ethernet ring protection for carrier Ethernet networks", IEEE Communications Magazine, 1 January 2008; and US 6,766,482 provide respective technical solutions; however, the above mentioned problem still remains unsolved.

### Summary of the Invention

The present invention provides a method for controlling the times of refreshing the Ethernet Forwarding Database as claimed in claim 1 that solves the technical problems. The method overcomes the problem of the unstable switching caused by a large amount of broadcast frames which are generated by the nodes refreshing the Ethernet Forwarding Database frequently when switching occurs to the network links.

The present invention provides a method for controlling the times of refreshing an Ethernet Forwarding Database, wherein the time of an address refresh pause timer is preconfigured, and the method includes:
step 1: receiving a first request for refreshing the Ethernet Forwarding Database;
step 2: refreshing the Ethernet Forwarding Database and starting the address refresh pause timer; and
step 3: receiving subsequent requests for refreshing the Ethernet Forwarding Database successively, detecting, each time when receiving the request for refreshing the Ethernet Forwarding Database, whether the address refresh pause timer expires, if yes, then proceeding to step 2, otherwise not performing refresh.

The time of the address refresh pause timer is configured according to a time interval between the first received request for refreshing the Ethernet Forwarding Database and a second received request for refreshing the Ethernet Forwarding Database.

The step 2 includes:
firstly refreshing the Ethernet Forwarding Database and then starting the address refresh pause timer; or
firstly starting the address refresh pause timer and then refreshing the Ethernet Forwarding Database.

The method for controlling the times of refreshing the Ethernet Forwarding Database provided by the present invention can be applied to prevent the problems of the unstable switching caused by the nodes refreshing the Ethernet Forwarding Database frequently when switching occurs to the network links, and improves the switching quality and speed of the Ethernet protection.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the path protection of the Ethernet ring;
Fig. 2 is a schematic diagram of the protection switching when a link of the Ethernet ring fails;
Fig. 3 is a schematic diagram of the implementing flow of a method for controlling the times of refreshing the Ethernet Forwarding Database according to an embodiment of the present invention;
Fig. 4 is a schematic diagram of the Ethernet ring protection applying another method for controlling the times of refreshing the Ethernet Forwarding Database according to embodiment 2; and
Fig. 5 is a schematic diagram of an Ethernet dual homing network protection applying the method for controlling the times of refreshing the Ethernet Forwarding Database according to embodiment 3.

### Detailed Description of the Embodiments

### Brief Description on Functions

Considering the problems existing in the prior art, the embodiments of the present invention propose a method for controlling the times of refreshing an Ethernet Forwarding Database, which is capable of improving the switching quality and speed of the Ethernet protection.

The method provided by the embodiments of the present invention will be described in detail with reference to the accompanying drawings and in conjunction with specific embodiments.

Fig. 3 is a flow chart of a method for controlling the times of refreshing the FDB according to an embodiment of the present invention. The method includes the following steps 301 to 304.

Step 301: the time of an address refresh pause timer is configured.

An FDB is included on each node. When a link fails, each node is required to refresh the FDB, therefore, each node is configured with an address refresh pause timer, the time of which is configured according to the time interval between the first received request for refreshing the FDB and the second received request for refreshing the FDB and is between 1 ms to 10 s.

Step 302: the first request for refreshing the Ethernet Forwarding Database is received.

Step 303: the Ethernet Forwarding Database is refreshed, and the address refresh pause timer is started.

Step 304: the subsequent requests for refreshing the Ethernet Forwarding Database are received successively, each time when the request for refreshing the Ethernet Forwarding Database is received, it is detected whether the address refresh pause timer expires, if yes, then it proceeds to step 303, otherwise refresh is not performed.

A subsequent request for refreshing the FDB may be the request in a plurality of requests for refreshing the FDB generated by the same switching except the first request, and also may be the request for refreshing the FDB generated by a new switching.

If it is the request in a plurality of requests for refreshing the FDB generated by the same switching except the first request, then the time interval between this request for refreshing the FDB and a previous request is relatively short; and if it is the request for refreshing the FDB generated by a new switching, then the time interval between this request for refreshing the FDB and a previous request is relatively long.

Since the node detects the address refresh pause timer when successively receiving a plurality of requests for refreshing the FDB, it will not refresh the FDB more than once repeatedly, which is capable of preventing the situation of instable switching caused by the node frequently refreshing the FDB more than once, thus improving the switching quality and speed of the Ethernet protection.

### Embodiment I

The application scenario of this embodiment is: a link of the sub-ring fails and a ring node is triggered to refresh the FDB. The method for controlling the times of refreshing the FDB will be described in conjunction with Figs. 1 and 2 hereinafter.

As shown in Fig. 1, the primary path from network A to network B is S1-S5-S6-S7; and the standby path is S1-S2-S3-S4-S7; wherein S1-S2-S3-S4-S5 is a sub-ring, S5-S4-S7-S6 is a ring, and S4 and S2 are blocked. When the primary path and the standby path both work normally, the data forwarding function of the standby path is blocked, and the protected data of the network will be transmitted on the primary path.

As shown in Fig. 2, when the link between S1 and S5 fails, the data forwarding function of the standby path is opened, and the transmission path from network A to network B is switched onto the standby path S1-S2-S3-S4-S7.

The processing procedure of the method provided by the embodiment of the present invention will be described in detail hereinafter by taking S6 receiving a refresh request and refreshing the FDB as an example.

The time of the address refresh pause timer is firstly configured to be 1s on S6.

When the link between S1 and S5 fails, S4 and S5 refresh the FDB and then send a link failure alarm protocol frame to inform other nodes of the sub-ring to perform protection switching and FDB refresh. The link failure alarm protocol frame sent by S5 can rapidly reach node S4 through the transmission of other rings and cause the address refresh of node S4, therefore, the interval between the address refresh of nodes S4 and S5 is very short, which is generally within 1 s.

S6 will receive the address protocol frame sent by S5 and S4 and then refresh the FDB. After receiving the first address refresh protocol frame, a request for refreshing the FDB is received, the FDB is refreshed, the address refresh pause timer is started and the address refresh pause timer runs. The interval between the subsequent address refresh protocol frames received by S6 and the first address refresh protocol frame is generally within 1 s, therefore, after node S6 receives these subsequent address refresh protocol frames, the address refresh pause timer is still running, and the action of refreshing the FDB is not carried out, which effectively reduces the times of address refresh. In this embodiment, since a plurality of address refresh requests generally arrive within 1 s, the address refresh pause timer is configured to be 1 s, and according to practical situation, it can also be configured as other values, which is not limited by the embodiment of the present invention.

### Embodiment 2

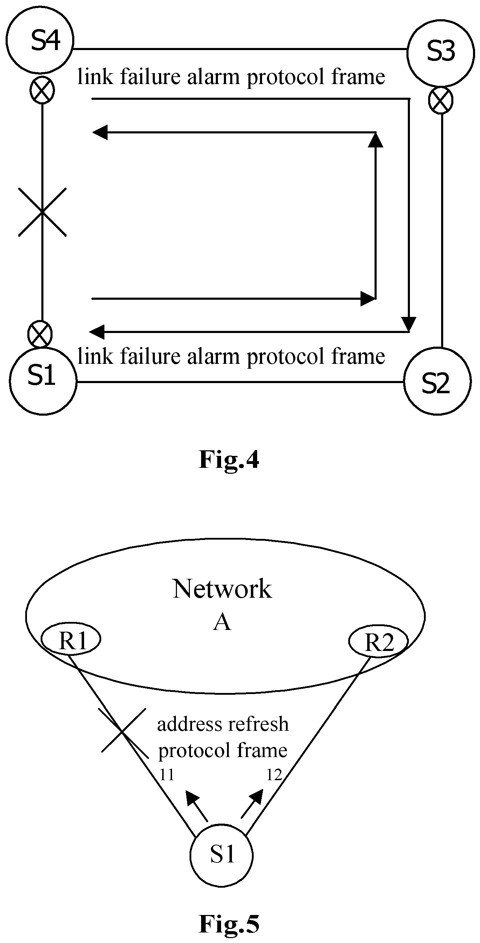

The application scenario of this embodiment is: an internal link of the ring fails, and internal nodes of the ring refresh the FDB. The method for controlling the times of refreshing the FDB will be described in conjunction with Fig. 4 hereinafter.

Nodes S1, S2, S3, and S4 consist of an Ethernet ring, and node S3 blocks the port, which is connected to S2, on S3. When the link between nodes S1 and S4 fails, nodes S1 and S4 detect link failure and send a link failure alarm protocol frame to the ring respectively, and S3 opens the port after receiving the link failure alarm protocol frame.

The processing procedure of the method provided by the embodiment of the present invention will be described in detail hereinafter by taking S2 receiving a refresh request and refreshing the FDB as an example.

Node S2 needs to refresh the FDB after receiving the link failure alarm protocol frame sent by S1, and also needs to refresh the FDB after receiving the link failure alarm protocol frame sent by S4, which causes node S2 to repeatedly refresh the FDB more than once and may cause the switching unstable.

The time of the address refresh pause timer is firstly configured to be 6s on S2.

When switching occurs in the Ethernet ring, S2 receives the link failure alarm protocol frame sent by S1 for the first time, receives a request for refreshing the FDB, refreshes the FDB and starts the address refresh pause timer. When S2 continues to receive the link failure alarm protocol frame sent by S4, S2 receives a request for refreshing the FDB; since the first link failure alarm protocol frame sent by node S4 is generally discarded by the blocked port of node S3 and cannot be forwarded, node S2 can only receive the subsequent link failure alarm protocol frames from node S4, and there is generally a 5s interval, so the time interval between the link failure alarm protocol frames from nodes S1 and S4 received by node S2 generally exceeds 5s, and it is required to configure the address refresh pause timer to exceed 5s. It is configured to be 6s in this embodiment and can also be configured to be other values according to practical situation. Since the address refresh pause timer is still running, the action of refreshing the FDB is not carried out and the FDB being refreshed for more than once is prevented.

### Embodiment 3

The method for controlling the times of refreshing the FDB when using the Ethernet dual homing network will be described hereinafter in conjunction with Fig. 5.

In the Ethernet dual homing network, node S 1 is a node which supports the forwarding function of the Ethernet, and there are two paths between S1 and network A, i.e. S1-R1-network A, or S1-R2-network A. When the two links, through which S 1 and network A are connected with each other, are switched due to failure, S1 needs to send an address refresh protocol frame to network A, and the nodes in network A refresh the FDB after receiving this protocol frame.

In virtue of the method provided by the embodiment of the present invention, the time of the address refresh pause timer is configured on nodes R1, R2 and on other nodes which need to refresh the FDB in network A. When switching occurs, S1 sends the address refresh protocol frame for more than once. When R1, R2 or other nodes which need to refresh the FDB in network A receive the first address refresh protocol frame sent by S1, they receive a request for refreshing the FDB, refresh the FDB and start the address refresh pause timer. When the nodes continue to receive the address refresh protocol frame sent by S1, they receive a request for refreshing the FDB; since the address refresh pause timer is still running, the action of refreshing the FDB is not carried out, which prevents the FDB from being refreshed for more than once.

A computer readable medium is further provided according to an embodiment of the present invention. The computer readable medium is stored thereon with computer executable instructions. When these instructions are executed by a computer or processor, the computer or processor is made to perform the process from step 301 to step 304 as shown in Fig. 3, and preferably, one or more of the above embodiments 1 to 4 can be implemented.

In summary, the method for controlling the times of refreshing the FDB provided by the embodiments of the present invention can prevent the problems that the switching is unstable caused by the nodes frequently refreshing the FDB during the protection switching of the Ethernet, which improves the switching quality and speed of Ethernet protection.

Moreover, the implementation of the present invention makes no modification to the system architecture and the current processing procedure, which is easy to implement and promote in the technical field and has rather strong industrial applicability.

Above description is only to illustrate the preferred embodiments but not to limit the present invention. Various alterations and changes to the present invention are apparent to those skilled in the art. The scope defined in claims shall comprise any modification, equivalent substitution and improvement within the principle of the present invention.

## Claims

1. A method for controlling times of refreshing an Ethernet Forwarding Database, comprising the steps of:
configuring a time of an address refresh pause timer (301);
receiving a first request for refreshing the Ethernet Forwarding Database (302);
refreshing the Ethernet Forwarding Database and starting the address refresh pause timer (303); and
receiving subsequent requests for refreshing the Ethernet Forwarding Database successively, detecting, each time when receiving the request for refreshing the Ethernet Forwarding Database, whether the address refresh pause timer expires, if yes, then proceeding to the step of refreshing the Ethernet Forwarding Database and starting the address refresh pause timer, otherwise not performing refresh (304);
wherein the time of the address refresh pause timer is configured according to a time interval between the first received request for refreshing the Ethernet Forwarding Database and a second received request for refreshing the Ethernet Forwarding Database.

2. The method for controlling the times of refreshing the Ethernet Forwarding Database according to Claim 1, wherein the step of refreshing the Ethernet Forwarding Database and starting the address refresh pause timer comprises:
firstly refreshing the Ethernet Forwarding Database and then starting the address refresh pause timer; or
firstly starting the address refresh pause timer and then refreshing the Ethernet Forwarding Database.

## Patentansprüche

1. Verfahren zum Steuern der Zeiten des Auffrischens einer Ethernet-Weiterleitungsdatenbank, umfassend folgende Schritte:
Konfigurieren einer Zeit eines Adressen-Auffrischpausen-Zeitgebers (301); Empfangen einer ersten Anforderung zum Auffrischen der Ethernet-Weiterleitungsdatenbank (302);
Auffrischen der Ethernet-Weiterleitungsdatenbank und Starten des Adressen-Auffrischpausen-Zeitgebers (303); und
nacheinander Empfangen nachfolgender Anforderungen zum Auffrischen der Ethernet-Weiterleitungsdatenbank, jedes Mal Erfassen beim Empfangen der Anforderung zum Auffrischen der Ethernet-Weiterleitungsdatenbank, ob der Adressen-Auffrischpausen-Zeitgeber abläuft, wenn ja, dann Fortsetzen mit dem Schritt zum Auffrischen der Ethernet-Weiterleitungsdatenbank und Starten des Adressen-Auffrischpausen-Zeitgebers, andernfalls kein Durchführen des Auffrischens (304);
wobei die Zeit des Adressen-Auffrischpausen-Zeitgebers gemäß einem Zeitintervall zwischen der ersten empfangenen Anforderung zum Auffrischen der Ethernet-Weiterleitungsdatenbank und einer zweiten empfangenen Anforderung zum Auffrischen der Ethernet-Weiterleitungsdatenbank konfiguriert wird.

2. Verfahren zum Steuern der Zeiten des Auffrischens der Ethernet-Weiterleitungsdatenbank nach Anspruch 1, wobei der Schritt zum Auffrischen der Ethernet-Weiterleitungsdatenbank und Starten des Adressen-Auffrischpausen-Zeitgebers Folgendes umfasst:
zuerst Auffrischen der Ethernet-Weiterleitungsdatenbank und dann Starten des Adressen-Auffrischpausen-Zeitgebers; oder
zuerst Starten des Adressen-Auffrischpausen-Zeitgebers und dann Auffrischen der Ethernet-Weiterleitungsdatenbank.

## Revendications

1. Un procédé de commande des heures de rafraîchissement d'une base de données de transfert Ethernet, comprenant les étapes suivantes :
la configuration d'une heure d'une horloge de pause de rafraîchissement d'adresses (301),
la réception d'une première demande de rafraîchissement de la base de données de transfert Ethernet (302),
le rafraîchissement de la base de données de transfert Ethernet et le démarrage de l'horloge de pause de rafraîchissement d'adresses (303), et
la réception de demandes subséquentes de rafraîchissement de la base de données de transfert Ethernet de manière successive, la détection, à chaque réception de la demande de rafraîchissement de la base de données de transfert Ethernet, si l'horloge de pause de rafraîchissement d'adresses a expiré, si oui, alors la poursuite avec l'étape de rafraîchissement de la base de données de transfert Ethernet et le démarrage de l'horloge de pause de rafraîchissement d'adresses, sinon la non-exécution du rafraîchissement (304),
l'heure de l'horloge de pause de rafraîchissement d'adresses étant configurée en fonction d'un intervalle de temps entre la première demande de rafraîchissement reçue de la base de données de transfert Ethernet et une deuxième demande de rafraîchissement reçue de la base de données de transfert Ethernet.

2. Le procédé de commande des heures de rafraîchissement de la base de données de transfert Ethernet selon la revendication 1, dans lequel l'étape de rafraîchissement de la base de données de transfert Ethernet et le démarrage de l'horloge de pause de rafraîchissement d'adresses comprend :
d'abord le rafraîchissement de la base de données de transfert Ethernet et ensuite le démarrage de l'horloge de pause de rafraîchissement d'adresses, ou
d'abord le démarrage de l'horloge de pause de rafraîchissement d'adresses et ensuite le rafraîchissement de la base de données de transfert Ethernet.
